# FASCICULE DE BREVET EUROPEEN

(11) **EP 1 618 978 B1**
(45) Date de publication et mention de la délivrance du brevet: **12.09.2007**
(21) Numéro de dépôt: 05291223.5
(22) Date de dépôt: 07.06.2005
(51) Int. Cl.: B23B 45/04

(54) **Machine d'usinage à avance mécanique autorisant une opération de débourrage de coupeau**
Werkzeugmaschine mit mechanischem Vorschub welche ein Ausräumen der Späne ermöglicht
Machine tool with mechanical advance allowing a jam clearing of chips

(30) Priorité: 23.07.2004 FR 0408204
(43) Date de publication de la demande: 25.01.2006
(73) Titulaire: Cooper Power Tools SAS, 77330 Ozoir la Ferriere (FR)
(72) Inventeur: Oehninger, Jean, 77330 Ozoir la Ferriere (FR); Jaillon, Jacques, 93130 Noisy le Sec (FR)
(74) Mandataire: Domenego, Bertrand

(56) Documents cités:
- DE-A1- 1 958 412
- DE-A1- 3 742 725
- FR-A- 2 829 952

## Description

La présente invention concerne une machine d'usinage du type comprenant :
- un carter,
- une broche porte-outils s'étendant le long d'un axe,
- un mécanisme d'entraînement de la broche porte-outils, le mécanisme comprenant :
   - un premier organe d'entraînement en rotation de la broche autour de son axe par rapport au carter,
   - un deuxième organe d'entraînement en translation de la broche le long de son axe par rapport au carter, le deuxième organe d'entraînement en translation étant vissé sur un tronçon fileté de la broche, de sorte que la broche avance ou recule le long de l'axe en fonction de la vitesse relative de rotation des organes d'entraînement.

L'invention s'applique par exemple aux machines pneumatiques de perçage utilisées dans la construction aéronautique.

Une machine du type précité est connue par exemple de DE 1958412 ou de US-5 351 797. Le mécanisme d'entraînement d'une telle machine est dit « à avance mécanique » en français ou « positive feed drill » en anglais.

Un moteur unique assure alors, via le mécanisme d'entraînement, l'entraînement de la broche en rotation autour de son axe et simultanément son avance ou son recul par translation le long de son axe.

Les entraînements en translation et en rotation de la broche étant mécaniquement liés, l'avance de la broche par tour est constante. Ainsi, les variations de la vitesse du moteur n'ont aucune incidence sur la vitesse d'avance par tour. L'épaisseur des copeaux formés reste donc constante et favorise la qualité de surface et la précision des alésages percés par une telle machine.

Si une telle machine s'avère généralement satisfaisante, son utilisation pour percer des alésages profonds ou les matériaux réputés difficiles, tels que les matériaux composites, peut s'avérer délicate.

En effet, par exemple lors du perçage d'un alésage profond, les copeaux s'accumulent dans les goujures du foret porté par la broche, jusqu'à provoquer le calage du moteur de la machine. Il est alors nécessaire de procéder en plusieurs fois ou de recommencer de nouveaux cycles de perçage pour un même alésage à percer.

La qualité du perçage peut également être dégradée en cas de mauvais repositionnement du foret par rapport à l'alésage commencé. La pression des copeaux à l'intérieur de l'alésage provoque en outre la détérioration de sa surface.

Pour pouvoir éliminer les copeaux accumulés dans les goujures du foret, on peut envisager de rétracter la broche tout en continuant à l'entraîner en rotation autour de son axe. Un tel mouvement correspond en fait au mouvement de recul généralement produit par le mécanisme d'avance mécanique.

Toutefois, un tel recul nécessiterait d'interrompre le cycle de perçage en cours, de sorte qu'il faudrait commencer un nouveau cycle de perçage depuis le début.

La durée de l'opération de débourrage ainsi réalisée serait extrêmement longue, conduisant à des temps de perçage inacceptables.

DE-37 42 725 et DE-19 58 412 décrivent une machine d'usinage permettant de rétracter rapidement la broche au cours d'une opération d'usinage. Le recul de la broche est alors assuré par un système compliqué.

Un but de l'invention est de résoudre ce problème en fournissant une machine du type précité qui soit simple et qui permette de percer des alésages profonds ou des matériaux réputés difficiles en un temps réduit.

A cet effet, l'invention a pour objet une machine selon la revendication 1.

Selon des modes particuliers de réalisation, la machine peut comprendre l'une ou plusieurs des caractéristiques des revendications dépendantes.

L'invention sera mieux comprise à la lecture de la description qui va suivre, donnée uniquement à titre d'exemple, et faite en se référant aux dessins annexés, sur lesquels :
- la figure 1 est une vue schématique en coupe latérale d'une machine selon l'invention,
- la figure 2 est une vue schématique agrandie de la partie Il de la figure 1, illustrant notamment les moyens de déplacement du deuxième organe d'entraînement de la broche de la machine de la figure 1,
- la figure 3 est une vue schématique illustrant une partie du circuit pneumatique de la machine de la figure 1,
- la figure 4 est une vue analogue à la figure 3 illustrant une variante de la machine de la figure 1,
- la figure 5 est une vue analogue à la figure 1 illustrant une variante de la machine de la figure 1, et
- les figures 6 et 7 sont des vues schématiques agrandies des parties VI et VII de la machine de la figure 5.

Dans tout ce qui suit, les termes « droite », « gauche », « vertical », « horizontal », « inférieur », « supérieur », « haut » et « bas » s'entendent par rapport à la position de la machine sur les figures.

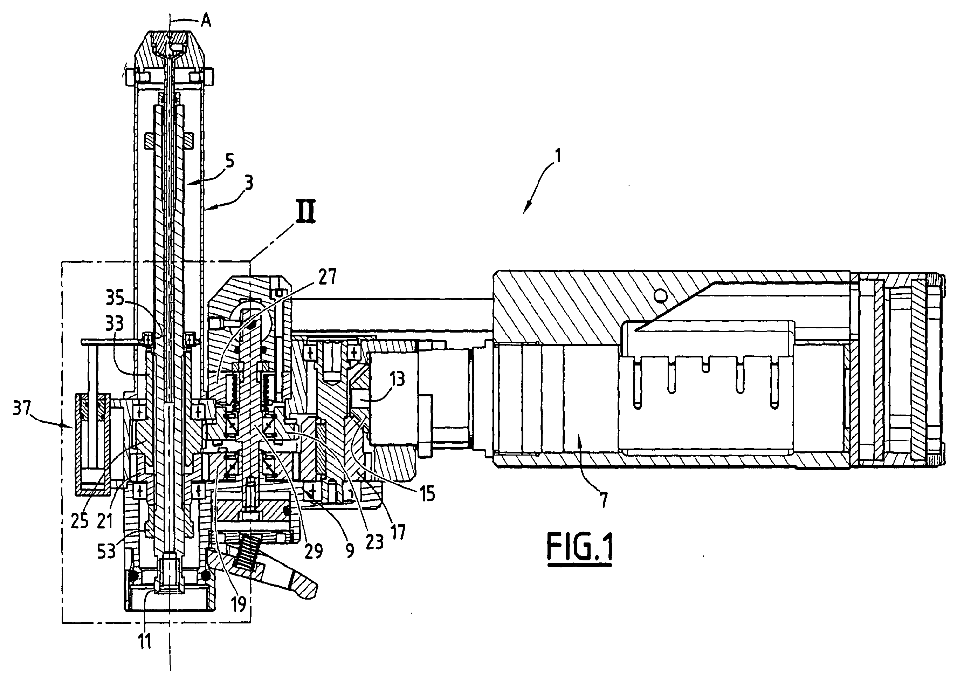

La figure 1 illustre schématiquement une machine de perçage 1 portative qui comprend principalement :
- un carter 3,
- une broche porte-outils 5 s'étendant suivant un axe vertical A,
- un moteur 7, par exemple pneumatique, et
- un mécanisme 9 d'entraînement de la broche reliant mécaniquement le moteur 7 et la broche 5.

La broche 5 est reçue dans le carter 3 de manière mobile en rotation autour de son axe A et en translation le long de cet axe A.

De manière classique, un foret de perçage peut être monté de manière amovible à l'extrémité inférieure 11 de la broche 5. L'arbre de sortie 13 du moteur 7 porte un premier pignon conique 15 qui engrène avec un deuxième pignon conique 17 appartenant au mécanisme d'entraînement 9. Dans l'exemple représenté, le moteur 7 est disposé sensiblement à angle droit par rapport à la broche 5. Toutefois, il pourrait être sensiblement parallèle à cette dernière, comme exposé par exemple dans le document FR-2 829 952.

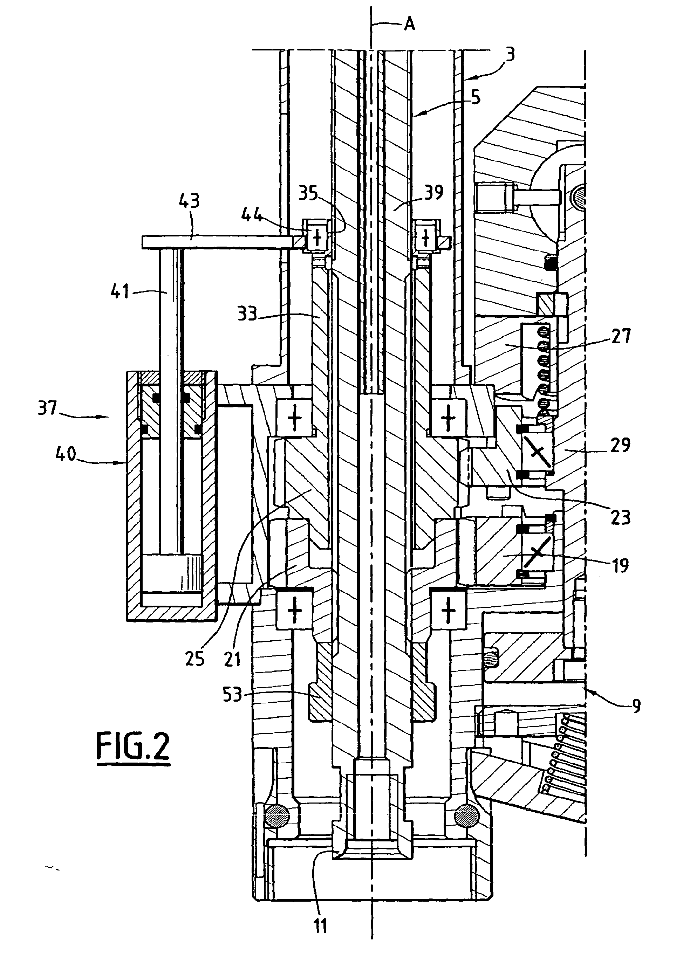

Comme illustré par les figures 1 et 2, le mécanisme d'entraînement 9 comprend, outre le deuxième pignon conique 17, les éléments suivants pour qu'il constitue un mécanisme dit « à avance mécanique » en français ou « positive feed drill » en anglais :
- un premier pignon/crabot 19 engrenant avec le deuxième pignon conique 17,
- un premier pignon 21 engrenant avec le premier pignon/crabot 19,
- un deuxième pignon/crabot 23 surmontant le premier pignon/crabot 19,
- un deuxième pignon 25 qui surmonte le premier pignon 21, et
- un crabot fixe 27 qui surmonte le deuxième pignon/crabot 23 et qui est par exemple solidaire du carter 3.

Le premier pignon 21 est enfilé sur la broche 5 et est solidaire en rotation de cette dernière. La broche 5 est mobile en translation par rapport au pignon 21 le long de l'axe A. Cette liaison entre la broche 5 est le premier pignon 21 est par exemple obtenue grâce à des cannelures.

De manière classique, le deuxième pignon/crabot 23 est porté par un coulisseau 29 pour être mobile entre une position abaissée, dans laquelle le deuxième pignon/crabot 23 crabote avec le premier pignon/crabot 19 et est donc solidaire en rotation de ce dernier, et une position soulevée, dans laquelle le deuxième pignon/crabot 23 crabote avec le crabot fixe 27 et est donc fixe en rotation par rapport au carter 3.

Sur la figure 1, le deuxième pignon/crabot 23 a été représenté dans une position intermédiaire entre ses deux positions extrêmes.

De manière classique, les nombres de dents des pignons/crabots 19 et 23 et des pignons 21 et 25 sont adaptés pour que, lorsque les deux pignons/crabots 19 et 23 sont crabotés, le pignon 25 tourne à une vitesse légèrement supérieure à celle du pignon 21 pour entraîner la broche en translation vers le bas, dans un mouvement d'avance, comme cela sera décrit par la suite.

Contrairement aux mécanismes classiques à avance mécanique, le deuxième pignon 25 est libre en rotation par rapport à la broche 5 et n'est donc pas vissé sur un tronçon fileté de cette dernière.

Le deuxième pignon 25 est prolongé vers le haut par un crabot rotatif 33 qui est par exemple venu de matière avec le deuxième pignon 25. En variante, le crabot 33 peut être fixé à ce dernier.

Le crabot 33 est donc solidaire en rotation du deuxième pignon 25 et peut tourner librement par rapport à la broche 5 autour de son axe A.

Le mécanisme d'entraînement 9 comprend en outre, comme on le voit plus précisément sur la figure 2, une noix/crabot 35, qui surmonte le crabot 33, et des moyens 37 de déplacement de la noix/crabot 35 par rapport au carter 3.

La noix/crabot 35 est vissée sur un tronçon fileté 39 de la broche 5. Les moyens 37 de déplacement comprennent un vérin pneumatique 40 dont la tige 41 est prolongée latéralement par une fourchette 43 qui reçoit la noix/crabot 35 par l'intermédiaire d'un roulement 44. La noix/crabot 35 peut donc tourner librement dans la fourchette 43 autour de l'axe longitudinal A de la broche 5, et est solidaire de la fourchette 43 en translation le long de cet axe.

La noix/crabot 35 est mobile en translation le long de l'axe A par rapport au carter 3, sous l'action du vérin 40 entre :
- une position abaissée (figures 1 et 2), ou avancée si l'on considère le sens d'avance de la broche 5, position dans laquelle la noix/crabot 35 et le crabot 33 sont crabotés, et
- une position soulevée (non-représentée sur les figures), ou reculée si l'on considère le sens d'avance de la broche 5, dans laquelle la noix/crabot 35 et le crabot 33 sont libérés l'un de l'autre.

Dans la position avancée, la noix/crabot 35 est solidaire en rotation du crabot 33 et donc du deuxième pignon 35.

Si le deuxième pignon/crabot 23 est en position abaissée et si le moteur 7 est alimenté en air sous pression, la noix/crabot 35 tourne alors autour de l'axe A à une vitesse légèrement supérieure à celle du premier pignon 21. Le mécanisme d'entraînement 9 assure alors :
- l'entraînement en rotation de la broche 5 via le pignon/crabot 19 et le premier pignon 21, et simultanément,
- l'avance de la broche 5, c'est-à-dire son déplacement en translation vers le bas le long de l'axe A, cette avance étant due à la liaison hélicoïdale entre la broche 5 et la noix/crabot 35 et à la différence de vitesses de rotation entre la noix/crabot 35 et le pignon 21 et donc la broche 5.

Dans le cas où l'entraînement de la broche 5 en rotation est effectué dans le sens horaire, le pas de la liaison hélicoïdale entre la broche 5 et la noix/crabot 35 est à gauche pour assurer le mouvement d'avance décrit.

Le premier mode d'entraînement permet de percer un alésage dans une pièce grâce à un foret porté par la broche 5.

La noix/crabot 35 étant toujours dans sa position avancée, si le deuxième pignon/crabot 23 passe dans sa position soulevée, le mécanisme d'entraînement 9 assure alors :
- l'entraînement en rotation de la broche 5 via le premier pignon/crabot 19 et le premier pignon 21, et simultanément,
- le recul de la broche 5, c'est-à-dire son déplacement en translation vers le haut le long de l'axe A, le deuxième pignon/crabot 23, le deuxième pignon 25, le crabot 33 et la noix/crabot 35 étant alors fixes, la rotation de la broche 5 autour de son axe A assurant le mouvement de recul du fait de la liaison hélicoïdale entre la noix/crabot 35 et la broche 5.

Ce deuxième mode d'entraînement permet de faire reculer la broche 5 à l'issue du perçage de l'alésage.

Les moyens 37 de déplacement permettent en outre d'assurer des opérations de débourrage lors d'un cycle de perçage. Pour cela, et en supposant que la broche 5 soit entraînée selon son premier mode d'entraînement, on commande le vérin 40 pour qu'il déplace la noix/crabot 35 vers sa position reculée.

Du fait de la liaison hélicoïdale entre la noix/crabot 35 et la broche 5, la broche 5 accompagne en translation le long de l'axe A la noix/crabot 35. Ce mouvement se poursuit jusqu'à ce que la butée de recul 53, qui est fixée sur la broche 5 sous le pignon 21, vienne en appui sur ce dernier, comme illustré sur les figures 1 et 2. La broche 5 est donc reculée et le foret est ressorti complètement de l'alésage en cours de perçage. Aucun réglage de la course de débourrage n'est donc nécessaire.

La noix/crabot 35 est alors dégagée du crabot 33. La noix/crabot 35 est alors entraînée en rotation par la broche 5 du fait des frottements entre le taraudage de la noix/crabot 35 et le tronçon fileté 39 de la broche 5. Le roulement 44 permet de limiter les frottements entre la fourchette 43 et la noix/crabot 35 pour permettre la rotation de la noix/crabot 35 avec la broche 5 autour de l'axe A.

Au cours de cette opération de débourrage, la broche 5 est toujours entraînée en rotation autour de son axe A via le premier pignon/crabot 19 et le premier pignon 21.

Les copeaux produits précédemment lors du perçage sont alors évacués.

Pour reprendre le perçage, les moyens 37 de déplacement ramènent la noix/crabot 35 dans sa position avancée.

Comme il n'y a pas eu de rotation relative entre la noix/crabot 35 et la broche 5 pendant l'opération de débourrage, la broche 5 et donc le foret qu'elle porte, reprennent la position qu'ils occupaient avant le débourrage et l'opération de perçage peut être reprise.

On notera que si des frottements freinaient la rotation de la noix/crabot 35 par rapport à la fourchette 43 pendant l'opération de débourrage, ils ne seraient aucunement défavorables à la reprise de l'opération de perçage, car la noix/crabot 35 se visserait tout au plus légèrement sur la broche 5, qui ne prendrait alors qu'un léger retard sur sa position d'origine lors de la reprise du perçage.

La pointe du foret porté par la broche 5 ne risquerait donc pas de venir percuter lors de son retour le fond de l'alésage en cours de perçage.

On notera que la course de débourrage de la broche 5 dépend de la profondeur de l'alésage déjà percé.

En effet, le vérin 40 tend à entraîner la broche 5 sur la totalité de la course de sa tige 41, mais le recul de la broche 5 est limité par l'appui de la butée 53 sur le pignon 21.

Les moyens 37 de déplacement permettent d'effectuer l'opération de débourrage en un temps relativement réduit, puisque le recul de la broche 5 n'est pas assuré par la liaison hélicoïdale entre la noix/crabot 35 et la broche 5, ce qui induirait un temps de recul, puis d'avance ultérieure de la broche 5, très important, mais par déplacement axial de la noix/crabot 35 par rapport au carter.

De plus, l'opération de perçage est reprise quasiment instantanément. La machine 1 permet ainsi d'effectuer des opérations de perçage en des temps réduits, même pour percer des alésages de grande profondeur ou des matériaux réputés difficiles. En outre, les alésages réalisés sont de bonne qualité, notamment du fait que la machine 1 permet de bénéficier des avantages des mécanismes à avance mécanique.

En effet, le mécanisme d'entraînement 9 comprend un premier organe d'entraînement en rotation de la broche 5, constitué par le pignon 21, et un deuxième organe d'entraînement en translation de la broche 5, constitué par la noix/crabot 35, l'avance ou le recul de la broche le long de l'axe A étant assuré en fonction de la vitesse relative de rotation de ces deux organes d'entraînement.

On observera que l'action des moyens 37 de déplacement sur la noix/crabot 35 pour assurer l'opération de débourrage permet à la machine 1 de conserver une structure simple.

L'enchaînement du premier mode d'entraînement, c'est-à-dire l'entraînement en rotation et simultanément l'avance de la broche 5, et du deuxième mode d'entraînement, c'est-à-dire l'entraînement en rotation et simultanément le recul de la broche 5, puis l'arrêt de l'alimentation du moteur 7 peuvent être commandés de manière classique, par exemple automatiquement par le circuit pneumatique d'alimentation du moteur 7, après actionnement du bouton de mise en marche de la machine 1.

De même, l'exécution de l'opération de débourrage au cours d'un cycle de perçage peut être commandée automatiquement, par exemple régulièrement dans le temps.

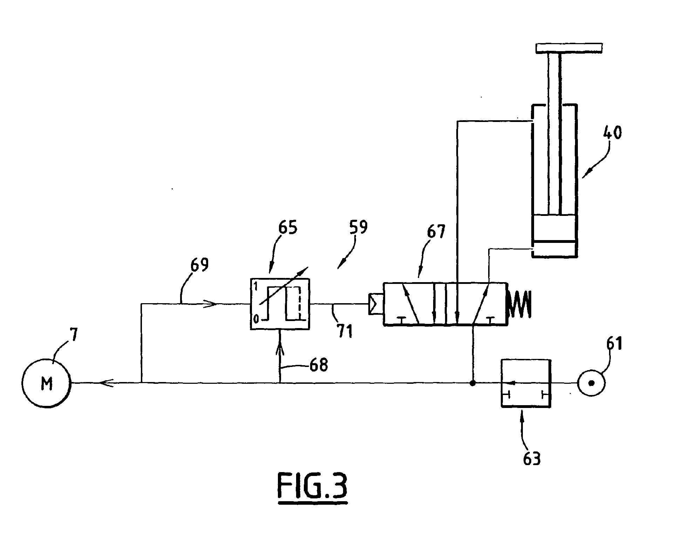

La figure 3 illustre schématiquement une partie 59 du circuit pneumatique de la machine 1 permettant d'assurer une telle fonction. Sur cette figure, la référence numérique 61 désigne la source d'air sous pression alimentant le moteur 7, et la référence 63 une vanne à quatre voies deux positions commandée par le bouton de mise en marche de la machine 1 pour provoquer l'alimentation pneumatique du moteur 7.

La partie 59 du circuit pneumatique comprend également un générateur 65 d'impulsions pneumatiques et un distributeur 67 à cinq voies deux positions.

Le générateur d'impulsions 65 est raccordé en aval de la vanne 63 par une conduite d'alimentation 68.

Il est également raccordé, en aval de la vanne 63, par une conduite de commande 69 et est relié par une conduite d'actionnement 71 au distributeur 67 pour l'actionner. Les impulsions fournies par le générateur 65 sont par exemple des créneaux. La durée de ces créneaux ainsi que l'intervalle de temps les séparant peuvent être réglés.

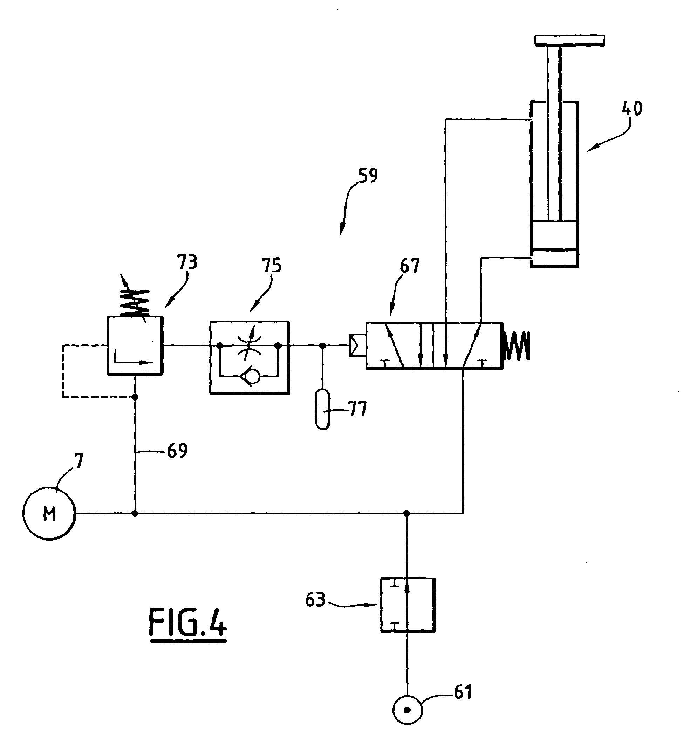

Lorsque le moteur 7 est alimenté en air comprimé via la vanne 63, le générateur 65 va engendrer régulièrement des créneaux de pression qui vont être appliqués par la conduite d'actionnement 71 au distributeur 67. En présence d'un tel créneau de pression, le distributeur 67 prend la position qu'il occupe sur la figure 4, position dans laquelle le vérin 40 est alimenté en air comprimé par la source 61 pour amener la noix/crabot 35 dans sa position reculée. L'opération de débourrage est alors initiée.

La noix/crabot 35 est maintenue dans cette position pendant toute la durée du créneau.

A la fin du créneau, le distributeur 67 ne reçoit plus de pression d'actionnement et le distributeur 67 est rappelé élastiquement dans son autre position, dans laquelle le vérin 40 est alimenté en air comprimé par la source 61 pour ramener la noix/crabot 35 dans sa position avancée. L'opération de débourrage est alors terminée.

La prochaine opération de débourrage aura lieu à l'apparition du créneau suivant engendré par le générateur 65. Comme indiqué précédemment, l'espacement temporel des créneaux engendrés par le générateur 65 peut être réglé afin de modifier la fréquence de débourrage.

La figure 4 illustre une variante de la machine des figures 1 à 3, dans laquelle l'opération de débourrage ne va pas être déclenchée sur une base temporelle régulière, mais en fonction des besoins.

Pour cela, la partie 59 du circuit pneumatique comprend successivement du côté de commande du distributeur 67:
- une soupape 73 de contrôle de la charge du moteur 7, raccordée par la conduite 69 en aval de la vanne 63,
- un clapet anti-retour 75, et
- une réserve d'air 77.

Lorsqu'un débourrage est nécessaire, la charge du moteur 7 et le couple qu'il applique augmentent, ainsi que la pression en amont du moteur 7.

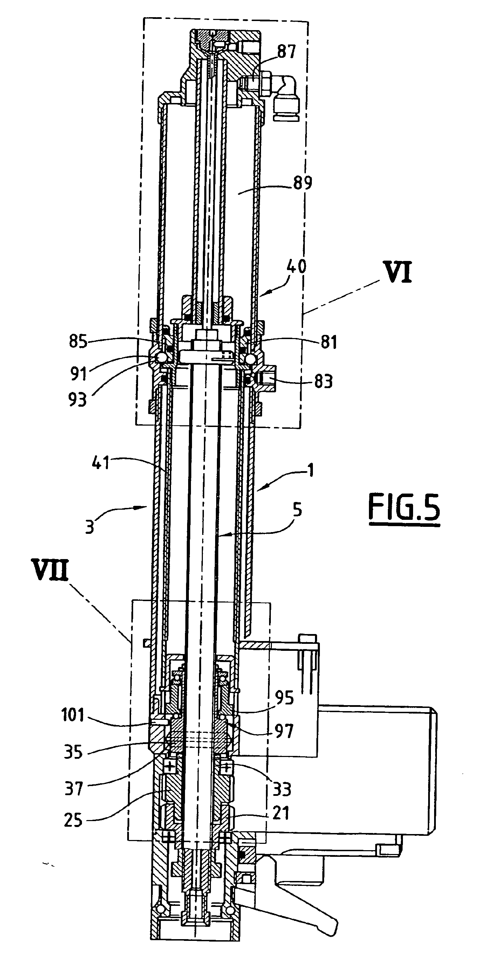

Lorsque cette pression, présente dans la conduite 69, dépasse un seuil prédéterminé et réglable, la soupape 73 laisse passer l'air sous pression qui traverse le clapet anti-retour 75, remplit la réserve d'air 77 et est appliqué au côté de commande du distributeur 67. Le distributeur 67 passe alors dans la position qu'il occupe sur la figure 5, position dans laquelle le vérin 40 est alimenté par la source 61 en air comprimé afin d'amener la noix/crabot 35 dans sa position reculée. L'opération de débourrage débute.

La charge du moteur 7 va alors diminuer mais le distributeur 67 est maintenu dans la position qu'il occupe sur la figure 5 par l'intermédiaire de l'air pneumatique contenu dans la réserve 77. L'opération de débourrage se poursuit.

Lorsque la réserve d'air 77 s'est suffisamment vidée, le distributeur 67 est rappelé élastiquement vers sa seconde position, dans laquelle le vérin 40 est alimenté en air sous pression par la source 61 pour déplacer la noix/crabot 35 dans sa position avancée.

L'opération de débourrage est alors terminée.

Seule la partie 59 du circuit pneumatique de la machine 1 a été décrite ci-dessus. Les autres parties permettant d'exécuter automatiquement un cycle de perçage, c'est-à-dire le premier mode d'entraînement, puis le deuxième mode d'entraînement et enfin l'arrêt du moteur pneumatique 7 étant classiques.

Les éléments décrits ci-dessus peuvent s'appliquer à une machine 1 électrique plutôt que pneumatique. Dans le cas où l'on souhaite effectuer l'opération de débourrage en fonction des besoins, on peut alors comparer l'intensité du courant électrique d'alimentation du moteur 7 à une valeur prédéterminée, afin de déclencher l'opération de débourrage lorsque la valeur mesurée est supérieure à la valeur prédéterminée. La grandeur représentative du couple fourni par le moteur est alors l'intensité du courant électrique d'alimentation, alors que pour la machine pneumatique de la figure 1, il s'agissait de la pression en amont du moteur 7.

En variante, les moyens 37 de déplacement peuvent être commandés en fonction de la poussée appliquée par le foret sur la pièce à percer.

Dans le cas d'une machine pneumatique, la partie 59 du circuit pneumatique peut comprendre, par exemple, un ressort qui est intercalé entre la fourchette 43 et la tige 41 du vérin et qui, au-delà d'un effort de poussée déterminé, provoque l'alimentation du vérin 40 pour déclencher l'opération de débourrage.

Dans le cas d'une machine électrique, le dispositif de commande peut alors comparer une mesure de la poussée du foret effectuée par une jauge de contrainte, avec une valeur prédéterminée réglable de poussée, au-delà de laquelle l'opération de débourrage est déclenchée par le dispositif de commande.

Les moyens 37 de déplacement peuvent présenter une structure et un emplacement différent de celui décrit précédemment. En particulier, le vérin 40 peut être coaxial à la broche 5 et disposé au-dessus de cette dernière, le vérin 40 pouvant alors constituer une partie du carter 3 entourant la broche 5.

Une telle variante est illustrée par les figures 5 à 7.

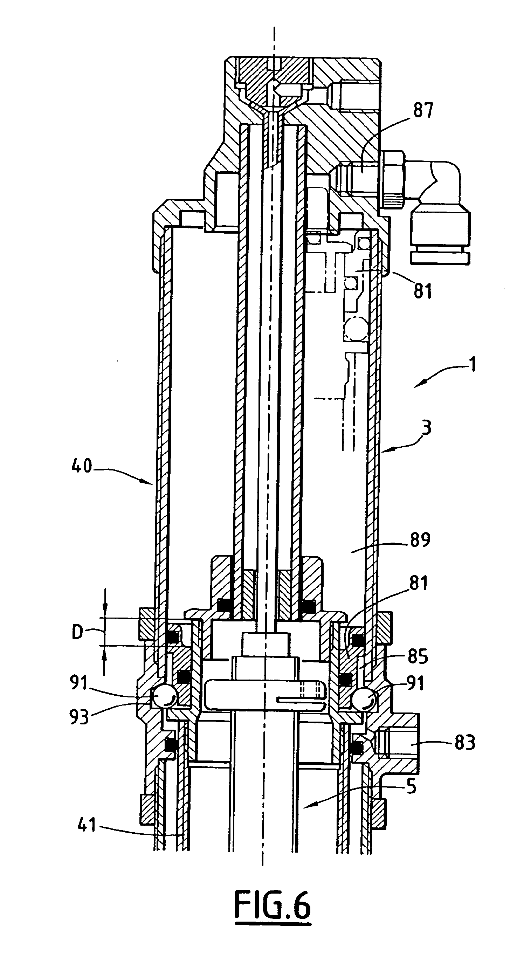

Comme on le voit plus précisément sur la figure 6 le carter 3 forme la partie extérieure du cylindre du vérin 40. La tige 41 a alors une forme tubulaire et entoure la broche 5. Le piston 81 du vérin 40 est alors disposé entre l'extrémité supérieure de la tige 41 et le carter 3.

Le piston 81 est mobile entre une position avancée illustrée en traits forts, sur la figure 6 et une position reculée, qui est partiellement esquissée en traits mixtes en haut à droite sur la figure 6.

Pour faire passer le piston 81 de sa position avancée à sa position reculée, on introduit de l'air sous pression via l'orifice 83 dans la chambre de recul 85 délimitée à l'intérieur du carter 3 sous le piston 81, cet air sous pression vient alors pousser le piston 81 vers le haut jusqu'à l'amener dans sa position reculée.

Pour ramener le piston dans sa position avancée, on introduit de l'air via l'orifice 87 dans la chambre d'avance 89 délimitée à l'intérieur du carter 3 au-dessus du piston 81.

La tige 41 est entraînée axialement par le piston 81 et le suit donc dans ses déplacements axiaux.

Dans la variante illustrée sur les figures 5 à 7, la machine 1 comprend des éléments 91 de retenue du piston 81, et donc de la tige 41, dans leurs positions avancées. Ces éléments de retenue 91 sont des sphères 91 qui sont disposées sous le piston 81 et qui viennent s'engager en partie dans une gorge circulaire 93 du carter 3.

En l'absence d'air sous pression alimentant l'orifice 83, ces éléments 91 s'opposent au recul du piston 91 en venant s'appuyer sur la paroi supérieure de la gorge 93. Le carter 3 reprend alors mécaniquement l'effort de poussée exercé par le foret sur la pièce usinée.

Ainsi, le vérin 40 utilisé n'a pas à assurer pneumatiquement la retenue de la tige 41 lors de l'usinage. Le vérin 40 peut donc avoir des dimensions relativement réduites et ne pas augmenter l'encombrement global de la machine 1, comme dans l'exemple illustré.

On observera qu'il existe une légère possibilité de débattement axial D entre la tige 41 et le piston 81 permettant, lors de l'alimentation en air de la chambre 85, de soulever légèrement le piston 81 par rapport à la tige 41 pour permettre le dégagement des billes 91 de la gorge 93 et ainsi le recul de la tige 41 par rapport au carter 3.

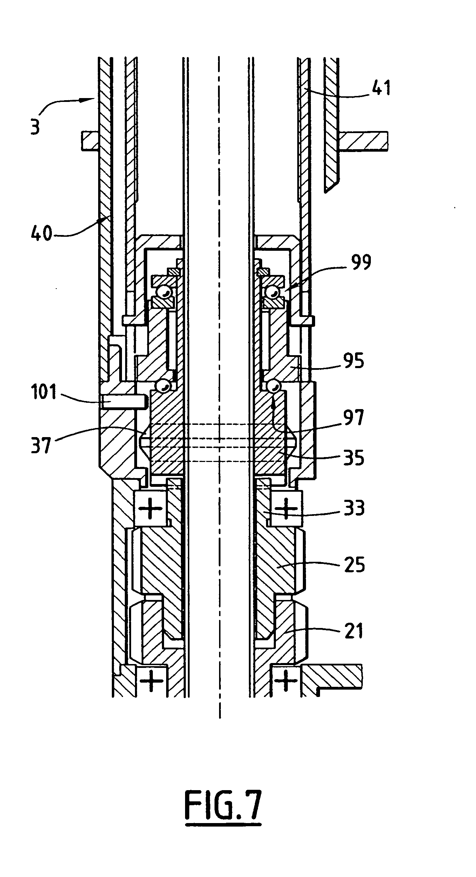

La figure 7 illustre plus particulièrement la liaison de l'extrémité inférieure 95 de la tige 41 avec la noix/crabot 45. Cette liaison est par exemple assurée grâce à un roulement à billes inférieur 97 et une butée à billes supérieure 99 qui permettent à la tige 41 d'assurer les mouvements d'avance et de recul de la noix/crabot 35 comme décrit pour les variantes précédentes.

Dans la variante des figures 5 à 7, on observera que la noix/crabot 35 possède des reliefs extérieurs 37 qui, lors du mouvement de recul de la noix/crabot 35, vont venir momentanément en prise avec une goupille 101 en saillie vers l'intérieur depuis le carter 3. Cette goupille 101 va donc bloquer en rotation pendant un court laps de temps la noix/crabot 35. La broche 11 continuant à être entraînée en rotation lors de cet arrêt momentané de la noix/crabot 35, la noix/crabot 35 se visse légèrement sur la broche 5, de sorte qu'elle va prendre un léger retard sur sa position d'origine lors de la reprise du perçage.

Il est ainsi garanti que, lors de la reprise de ce perçage, la pointe du foret porté par la broche 5 ne vienne pas percuter le fond de l'alésage, malgré les possibilités de déformation que pourrait présenter le support de la machine lors du perçage.

Plus généralement, cet effet pourrait être obtenu avec des organes 37, 101 de formes différentes, mais permettant toujours d'obtenir un freinage de la rotation de la noix/crabot 35 par rapport à la broche 5 lors de son mouvement de recul. On observera que cette caractéristique peut être utilisée indépendamment du positionnement du vérin 40 coaxialement à la broche 5, tout comme l'utilisation d'éléments 91 de retenue axiale de la broche 5 lors d'un perçage.

De même, la machine 1 n'est pas nécessairement portative et n'est pas nécessairement une machine de perçage.

Plus généralement, la possibilité de translation de la broche 5 autorisée par les moyens 37 de déplacement, peut être utilisée à d'autres fins que l'exécution d'une opération de débourrage.

Plus généralement, le déplacement du premier organe 21 d'entraînement du premier organe 21 d'entraînement en rotation de la broche 5 et le déplacement du deuxième organe 35 d'entraînement en translation de la broche 5 peuvent être assurés par deux moteurs distincts asservis électroniquement l'un à l'autre.

## Revendications

1. Machine (1) d'usinage du type comprenant :
- un carter (3),
- une broche porte-outils (5) s'étendant le long d'un axe (A),
- un mécanisme d'entraînement (9) de la broche porte-outils, le mécanisme comprenant :
. un premier organe (21) d'entraînement en rotation de la broche (5) autour de son axe par rapport au carter (3),
. un deuxième organe (35) d'entraînement en translation de la broche le long de son axe par rapport au carter (3), le deuxième organe d'entraînement (35) étant vissé sur un tronçon fileté (39) de la broche (5), de sorte que la broche (5) avance ou recule le long de l'axe (A) en fonction de la vitesse relative de rotation des organes d'entraînement (21, 35),
**caractérisée en ce qu'**elle comprend des moyens (37) de déplacement du deuxième organe d'entraînement (35) par rapport au carter (3) le long de l'axe (A) entre une position avancée et une position reculée.

2. Machine selon la revendication 1, dans laquelle le premier organe d'entraînement est un pignon (21) coaxial et lié en rotation à la broche (5), la broche pouvant coulisser le long de son axe (A) par rapport au premier organe d'entraînement (21), dans laquelle le mécanisme d'entraînement (9) comprend un premier pignon/crabot (19) engrenant avec le premier organe d'entraînement (21), un deuxième pignon/crabot (23) relié au deuxième organe d'entraînement (35) pour pouvoir l'entraîner en rotation, et dans laquelle le deuxième pignon/crabot (23) est mobile entre une position d'avance de la broche, dans laquelle il crabote avec le premier pignon/crabot (19), et une position de recul de la broche, dans laquelle il est dégagé du premier pignon/crabot (19).

3. Machine selon la revendication 2, dans laquelle, dans sa position reculée, le deuxième organe d'entraînement (35) n'est pas lié en rotation au deuxième pignon/crabot (23).

4. Machine selon la revendication 3, dans laquelle, le mécanisme d'entraînement (9) comprend un deuxième pignon (25), coaxial à la broche (5) et engrenant avec le deuxième pignon/crabot (23), et un crabot rotatif (33) solidaire en rotation du deuxième pignon (25), et dans laquelle le deuxième organe d'entraînement est une noix/crabot (35), qui crabote avec le crabot (33), lorsque la noix/crabot (35) est en position avancée, et qui est libérée du crabot (33) lorsque la noix/crabot (35) est en position reculée.

5. Machine selon l'une des revendications 2 à 4, dans laquelle le mécanisme d'entraînement (9) comprend un crabot fixe (27) qui crabote avec le deuxième pignon/crabot (23) lorsqu'il est en position d'avance de la broche.

6. Machine selon l'une des revendications précédentes, comprenant un dispositif (59) de commande des moyens (37) de déplacement en fonction du couple fourni par le moteur d'entraînement de la broche (5).

7. Machine selon la revendication 6, dans laquelle le dispositif de commande (59) comprend des moyens de comparaison d'une grandeur représentative du couple fourni par le moteur (7) avec une valeur prédéterminée au-delà de laquelle une opération de débourrage doit être déclenchée.

8. Machine selon l'une des revendications précédentes, comprenant un dispositif de commande des moyens (37) de déplacement en fonction de la poussée exercée par l'outil sur une pièce à usiner.

9. Machine selon l'une des revendications précédentes, comprenant un dispositif (59) de commande à intervalle temporel régulier des moyens (37) de déplacement.

10. Machine selon la revendication 9, dans laquelle les moyens (37) de déplacement comprennent un vérin pneumatique (40), et le dispositif de commande (59) comprend un générateur d'impulsions pneumatiques (65) pour engendrer régulièrement dans le temps des impulsions pneumatiques de commande du vérin (40).

11. Machine selon l'une des revendications précédentes, dans laquelle les moyens de déplacement comprennent un vérin (40) sensiblement coaxial avec la broche porte-outils (5).

12. Machine selon l'une des revendications précédentes, comprenant des éléments additionnels (91) de retenue du deuxième organe d'entraînement (35) contre un déplacement vers sa position reculée.

13. Machine selon l'une des revendications précédentes, comprenant des organes (37, 101) de freinage de la rotation du deuxième organe d'entraînement (35) par rapport à la broche porte-outils (5) lors d'un déplacement du deuxième organe d'entraînement (35) de sa position avancée vers sa position reculée.

## Claims

1. Machining machine (1) of the type comprising:
- a casing (3),
- a tool-holder spindle (5) extending along an axis (A),
- a mechanism (9) for driving the tool-holder spindle, the mechanism comprising:
. a first member (21) for rotating the spindle (5) about its axis relative to the casing (3),
. a second member (35) for driving the spindle in translation along its axis relative to the casing (3), the second drive member (35) being screwed onto a threaded section (39) of the spindle (5), so that the spindle (5) moves forward or backward along the axis (A) according to the relative speed of rotation of the drive members (21, 35),
**characterized in that** it comprises means (37) for moving the second drive member (35) relative to the casing (3) along the axis (A) between a forward position and a backward position.

2. Machine according to Claim 1, in which the first drive member is a pinion (21) coaxial with and connected in rotation to the spindle (5), the spindle being able to slide along its axis (A) relative to the first drive member (21), in which the drive mechanism (9) comprises a first pinion/jaw clutch (19) engaging with the first drive member (21), a second pinion/jaw clutch (23) connected to the second drive member (35) in order to be able to rotate it, and in which the second pinion/jaw clutch (23) can be moved between a forward position of the spindle, in which it engages with the first pinion/jaw clutch (19), and a backward position of the spindle, in which it is disengaged from the first pinion/jaw clutch (19).

3. Machine according to Claim 2, in which, in its backward position, the second drive member (35) is not connected in rotation to the second pinion/jaw clutch (23).

4. Machine according to Claim 3, in which the drive mechanism (9) comprises a second pinion (25) coaxial with the spindle (5) and engaging with the second pinion/jaw clutch (23), and a rotary jaw clutch (33) fixedly attached in rotation to the second pinion (25), and in which the second drive member is a ball/jaw clutch (35), which engages with the jaw clutch (33) when the ball/jaw clutch (35) is in the forward position, and which is released from the jaw clutch (33) when the ball/jaw clutch (35) is in the backward position.

5. Machine according to one of Claims 2 to 4, in which the drive mechanism (9) comprises a fixed jaw clutch (27) which engages with the second pinion/jaw clutch (23) when it is in the forward position of the spindle.

6. Machine according to one of the preceding claims, comprising a device (59) for controlling the movement means (37) according to the torque provided by the motor driving the spindle (5).

7. Machine according to Claim 6, in which the control device (59) comprises means for comparing a magnitude representative of the torque provided by the motor (7) with a predetermined value beyond which a clearing operation must be initiated.

8. Machine according to one of the preceding claims, comprising a device for controlling the movement means (37) according to the pressure exerted by the tool on a workpiece.

9. Machine according to one of the preceding claims, comprising a device (59) for controlling the movement means (37) at regular time intervals.

10. Machine according to Claim 9, in which the movement means (37) comprise a pneumatic cylinder (40), and the control device (59) comprises a pneumatic pulse generator (65) in order to generate, regularly over time, pneumatic pulses for controlling the cylinder (40).

11. Machine according to one of the preceding claims, in which the movement means comprise a cylinder (40) substantially coaxial with the tool-holder spindle (5).

12. Machine according to one of the preceding claims, comprising additional elements (91) for holding the second drive member (35) against a movement towards its backward position.

13. Machine according to one of the preceding claims, comprising members (37, 101) for braking the rotation of the second drive member (35) relative to the tool-holder spindle (5) during a movement of the second drive member (35) from its forward position to its backward position.

## Patentansprüche

1. Werkzeugmaschine (1) der Bauart, die aufweist:
- ein Gehäuse (3),
- eine sich entlang einer Achse (A) erstreckende Werkzeughalterspindel (5),
- einen Antriebsmechanismus (9) der Werkzeughalterspindel (5), wobei der Mechanismus aufweist:
. ein erstes Mittel (21) zum drehenden Antrieb der Spindel (5) um ihre Achse relativ zu dem Gehäuse (3),
. ein zweites Mittel (35) zum Translationsantrieb der Spindel entlang ihrer Achse relativ zu dem Gehäuse (3), wobei das zweite Antriebsmittel (35) auf einen Gewindeabschnitt (39) der Spindel (5) geschraubt ist, so dass sich die Spindel (5) entlang der Achse (A) in Abhängigkeit von der relativen. Drehgeschwindigkeit der Antriebsmittel (21, 35) vor- oder zurückbewegt,
**dadurch gekennzeichnet, dass** sie Mittel (37) zur Verlagerung des zweiten Antriebsmittels (35) relativ zu dem Gehäuse (3) entlang der Achse (A) zwischen einer Position vorne und einer Position hinten aufweist.

2. Maschine gemäß Anspruch 1, wobei das erste Antriebsmittel ein koaxiales und mit der Spindel (5) drehend verbundenes Ritzel (21) ist, wobei die Spindel entlang ihrer Achse (A) relativ zu dem ersten Antriebsmittel (21) gleiten kann, wobei der Antriebsmechanismus (9) ein erstes Ritzel/Klaue (19), welches mit dem ersten Antriebsmittel (21) in Eingriff steht, und ein zweites Ritzel/Klaue (23) aufweist, welches mit dem zweiten Antriebsmittel (35) verbunden ist, um es drehend antreiben zu können, und wobei das zweite Ritzel/Klaue (23) frei beweglich ist zwischen einer Position der Spindel vorne, in welcher es mit dem ersten Ritzel/Klaue (19) kuppelt, und einer Position der Spindel hinten, in welcher es von dem ersten Ritzel/Klaue (19) losgekuppelt ist.

3. Maschine gemäß Anspruch 2, wobei das zweite Antriebsmittel (35) in seiner Position hinten nicht mit dem zweiten Ritzel/Klaue (23) drehbar verbunden ist.

4. Maschine gemäß Anspruch 3, wobei der Antriebsmechanismus (9) ein zweites Ritzel (25) aufweist, welches koaxial zu der Spindel (5) ist und mit dem zweiten Ritzel/Klaue (23) in Eingriff steht, und eine drehbare Klaue (33), die drehbar fest mit dem zweiten Ritzel (25) verbunden ist, und wobei das zweite Antriebsmittel ein Anschlag/Klaue (35) ist, welcher, wenn der Anschlag/Klaue (35) in einer Position vorne ist, mit der Klaue (33) gekuppelt ist, und welcher, wenn der Anschlag/Klaue (35) in einer Position hinten ist, von der Klaue gelöst ist.

5. Maschine nach einem der Ansprüche 2 bis 4, wobei der Antriebsmechanismus (9) eine fixierte Klaue (27) aufweist, die mit dem zweiten Ritzel/Klaue (23) kuppelt, wenn es in einer Position der Spindel vorne ist.

6. Maschine nach einem der vorhergehenden Ansprüche, die eine Vorrichtung (59) zur Steuerung der Mittel (37) zur Verlagerung in Abhängigkeit von dem durch den Antriebsmotor der Spindel (5) aufgebrachten Drehmoment aufweist.

7. Maschine nach Anspruch 6, wobei die Steuervorrichtung (59) Mittel zum Vergleich einer repräsentativen Größe des durch den Motor (7) bereitgestellten Drehmoments mit einem vorbestimmten Wert aufweist, oberhalb dessen ein Reinigungsvorgang in Gang gesetzt werden muss.

8. Maschine nach einem der vorhergehenden Ansprüche, die eine Vorrichtung zur Steuerung der Mittel (37) zur Verlagerung in Abhängigkeit von dem durch das Werkzeug auf ein Arbeitsstück ausgeübten Druck aufweist.

9. Maschine nach einem der vorhergehenden Ansprüche, die eine Vorrichtung (59) zur Steuerung der Verlagerungsmittel (37) in einem regelmäßigen Zeitintervall aufweist.

10. Maschine nach Anspruch 9, wobei die Verlagerungsmittel (37) einen pneumatischen Zylinder (40) aufweisen, und wobei die Steuervorrichtung (59) einen pneumatischen Impulsgenerator (65) aufweist, um zeitlich regelmäßig pneumatische Befehlsimpulse des Zylinders (40) zu erzeugen.

11. Maschine nach einem der vorhergehenden Ansprüche, wobei die Verlagerungsmittel einen mit der Werkzeughalterspindel (5) im Wesentlichen koaxialen Zylinder (40) aufweisen.

12. Maschine nach einem der vorhergehenden Ansprüche, die zusätzliche Mittel (91) zum Zurückhalten des zweiten Antriebsmittels (35) gegen eine Verlagerung in Richtung seiner Position hinten aufweist.

13. Maschine nach einem der vorhergehenden Ansprüche, die Mittel (37, 101) zum Abbremsen der Drehung des zweiten Antriebsmittels (35) relativ zu der Werkzeughalterspindel (5) bei einer Verlagerung des zweiten Antriebsmittels (35) aus seiner Position vorne in seine Position hinten aufweist.
